# EUROPÄISCHE PATENTSCHRIFT

(11) **EP 3 946 804 B1**
(45) Veröffentlichungstag und Bekanntmachung des Hinweises auf die Patenterteilung: **26.11.2025**
(21) Anmeldenummer: 19832862.7
(22) Anmeldetag: 13.12.2019
(51) Int. Cl.: B23Q 1/01, F16C 29/00, F16C 29/08, F16C 29/12

(54) **FÜHRUNGSVORRICHTUNG, PRÄZISIONSAUFLAGER FÜR EINE LINEARSCHIENE UND JUSTIERVERFAHREN**
GUIDING DEVICE, PRECISE SUPPORT FOR A GUIDING RAIL AND ADJUSTMENT METHOD
ENSEMBLE DE GUIDAGE, SUPPORT DE PRECISION POUR UN RAIL DE GUIDAGE ET METHODE D'AJUSTEMENT

(30) Priorität: 04.04.2019 DE 102019204852
(43) Veröffentlichungstag der Anmeldung: 09.02.2022
(73) Patentinhaber: DMG MORI Pfronten GmbH, 87459 Pfronten (DE)
(72) Erfinder: JUNG, Robert, 87459 Pfronten (DE)
(74) Vertreter: MERH-IP Matias Erny Reichl Hoffmann Patentanwälte PartG mbB
(86) Internationale Anmeldenummer: PCT/EP2019/085070
(87) Internationale Veröffentlichungsnummer: WO 2020/200504

(56) Entgegenhaltungen:
- EP-A1- 2 172 663
- DE-A1- 4 027 637
- US-A1- 2007 065 056

## Beschreibung

Die vorliegende Erfindung betrifft eine verbesserte Führungsvorrichtung für eine Werkzeugmaschine, ein verbessertes Präzisionsauflager für eine Linearschiene sowie ein Justierverfahren zum Justieren einer Führungsvorrichtung einer Werkzeugmaschine.

Gattungsgemäße aus dem Stand der Technik bekannte Führungsvorrichtungen für Werkzeugmaschinen erfordern meist eine arbeitsintensive und kostspielige Bearbeitung der Anlageflächen zur Aufnahme der Führungsschienen, um eine gewünschte Form- und Lagegenauigkeit der Führungsschiene zu erreichen.

Die Genauigkeit einer Werkzeugmaschine hängt unter anderem von der Genauigkeit der Linearbewegung der Achsen ab. Linearführungen (i.d.R. Rollenumlaufeinheiten bestehend aus Schiene und Wagen) werden auf Strukturteilen befestigt und beispielsweise gegen einen seitlichen Anschlag gedrückt. Über die Auflageflächen ist die Linearführung somit an der Werkzeugmaschine befestigt. Die Geradheit der Linearbewegung einer Achse hängt somit direkt von der Fertigungsgenauigkeit der Auflage und dem Anschlag des Strukturteils ab, auf dem die Schienen befestigt sind. Zur Erhöhung der Genauigkeit der Führungen werden beispielsweise in aufwändiger Handarbeit die Auflageflächen der Strukturteile, an denen die Linearführung befestigt wird, nachbearbeitet, um die gewünschte Genauigkeit zu erreichen.

Beispielsweise ist aus der DE 43 014 355 A1 ein Verfahren zur Anbringung einer Linearführungsschiene auf einer Basiseinheit bekannt. Das Verfahren schlägt vor, die Linearführungsschiene an verschiedenen beabstandeten Justierstellen vorzufixieren und einen Zwischenraum zwischen der Linearführungsschiene und der Basiseinheit mit einem härtbaren Füllmittel auszugießen. Durch Aushärten des Füllmittels kann die Linearführungsschiene an der Basiseinheit fixiert werden.

Ferner ist aus der DE 40 27 637 A1 eine Führungsvorrichtung für einen Schlitten eines vorzugsweise dreidimensionalen Meß- und/oder Anreißgerätes bekannt. Die Führungsvorrichtung verläuft entlang einer Längsseite einer Richtplatte mit einer Führungsschiene, die an mindestens einer Fläche der Richtplatte festspannbar ist, wobei die Führungsschiene an den Befestigungsstellen jeweils ein Justierelement aufweist, über das ein Abstand der Führungsschiene von der Fläche der Richtplatte einstellbar ist.

Ausgehend von dem vorstehenden Stand der Technik ist es eine Aufgabe der vorliegenden Erfindung eine Führungsvorrichtung sowie ein Präzisionsauflager für eine Linearführungsschiene einer Werkzeugmaschine bereitzustellen, sodass auf einfache und effiziente Weise die Genauigkeit der Werkzeugmaschine erhöht werden kann. Zudem ist es eine Aufgabe der vorliegenden Erfindung ein Justierverfahren zum Einstellen der Lage der Führungsschiene bereitzustellen, mit dem auf einfache und effiziente Weise eine hohe Genauigkeit der Linearführungsschiene erreicht werden kann, sodass eine möglichst präzise Linearbewegung entlang der Linearführung gewährleistet werden kann.

Zur Lösung der vorstehend genannten Aufgaben der vorliegenden Erfindung werden die Merkmale der unabhängigen Ansprüche vorgeschlagen. Abhängige Ansprüche betreffen bevorzugte Ausführungsbeispiele der vorliegenden Erfindung.

Gemäß einem Aspekt der Erfindung wird eine Führungsvorrichtung für eine Werkzeugmaschine vorgeschlagen. Die Führungsvorrichtung weist einen Grundkörper und eine Führungsschiene auf. Der Grundkörper kann ein Strukturteil einer Werkzeugmaschine sein. Die Führungsschiene kann zumindest eine Lagerfläche zur Lagerung der Führungsschiene am Grundkörper und eine Führungsachse (für bspw. eine Linearbewegung) aufweisen und der Grundkörper kann zumindest eine Anlagefläche aufweisen. Zudem wird erfindungsgemäß eine Vielzahl von austauschbaren Auflageplatten vorgeschlagen. Die austauschbaren Auflageplatten sind zur genauen Positionierung (bzw. Lagerung) der Führungsschiene am Grundkörper vorgesehen. Die Auflageplatten sind parallel zueinander entlang der Führungsachse zum Einstellen definierte Abstände zwischen der Lagerfläche der Führungsschiene und der Anlagefläche des Grundkörpers angeordnet. Durch diese Ausgestaltung ist es möglich, entlang der Führungsschiene die Vielzahl der Auflageplatten parallel zueinander vorzusehen und zwar zwischen der Lagerfläche der Führungsschiene und der Anlagefläche des Grundkörpers. Zur Einstellung der Position bzw. Lage der Führungsschiene ist es möglich, abschnittsweise, und zwar in den Abschnitten, in denen die jeweiligen austauschbaren Auflageplatten vorliegen, die Lage und/oder Form der Führungsschiene anzupassen und zwar durch Austausch der jeweiligen Auflageplatten durch entsprechend angepasste Auflageplatten. Die Auflageplatten bestimmen somit die genaue Position der Führungsschiene, sodass Ungenauigkeiten des Grundkörpers und/oder der Führungsschiene (bspw. herstellungsbedingte Ungenauigkeiten ), durch die angepassten, austauschbaren Auflageplatten ausgeglichen werden können. Eine aufwändige Bearbeitung der Auflagefläche am Grundkörper ist somit nicht mehr in vollem Umfang nötig, da die austauschbaren Auflageplatten an den Anlageflächen des Grundkörpers aufliegen und die Führungsschiene wiederum auf den austauschbaren Auflageplatten aufliegt. Somit kann durch die optimal angepassten austauschbaren Auflageplatten eine hohe Genauigkeit der Form und Lage der Führungsschiene erreicht werden, ohne eine aufwändige, großflächige Nachbearbeitung des Grundkörpers und/oder der Schiene zu benötigen.

Die Auflageplatten können entsprechend ihrer jeweiligen Plattendicke derart entlang der Führungsachse angeordnet sein, dass eine Genauigkeitsabweichung, wie beispielsweise eine Lagegenauigkeitsabweichung bzw. eine Formgenauigkeitsabweichung zwischen einer Ist-Position und einer Soll-Position der Führungsschiene und/oder des Grundkörpers ausgeglichen werden kann und die auf den Auflageplatten aufliegende Führungsschiene in eine vorbestimmte ideale Führungsposition gebracht werden kann. Durch Anpassung der Plattendicken und/oder der Form der jeweiligen austauschbaren Auflageplatten entlang der Abschnitte entlang der Längsachse der Führungsschiene ist eine hochpräzise Positionierung der Führungsschiene möglich, sodass eine Führungsvorrichtung für eine hochgenaue Linearbewegung bereitgestellt werden kann.

Mehrere Auflageabschnitte können entlang der Führungsschiene vorliegen und in jedem Auflageabschnitt kann eine Auflageplatte vorgesehen sein und der Abstand zwischen Führungsschiene und dem Grundkörper im jeweiligen Auflageabschnitt kann durch die Dicke der im Auflageabschnitt vorgesehenen Auflageplatten eingestellt werden.

Jeder Auflageabschnitt kann eine angepasste austauschbare Auflageplatte aufweisen, welche zum Ausgleich bzw. zum Kompensieren von Formabweichungen (bzw. Toleranzabweichungen) des im jeweiligen Auflageabschnitt vorliegenden Teils der Führungsschiene und des Grundkörpers angepasst ist.

Die Vielzahl der Auflageplatten umfasst bspw. mehrere horizontale Auflageplatten und mehrere vertikale Auflageplatten. Die horizontalen Auflageplatten sind beabstandet und parallel zueinander entlang einer horizontalen Anlagefläche des Grundkörpers vorgesehen. Bevorzugt sind die horizontalen Auflageplatten beanstandet zueinander angeordnet. Die vertikalen Auflageflächen können parallel zueinander entlang der vertikalen Anlagefläche am Grundkörper vorgesehen sein. Bevorzugt sind die vertikalen Auflageplatten miteinander kontaktiert. Vorteilhaft weist der Grundkörper eine vertikale Anlagefläche zur Aufnahme der vertikalen Auflageplatten auf sowie eine horizontale Anlagefläche zur Aufnahme der horizontalen Auflageplatten. Die vertikale Anlagefläche am Grundkörper kann jedoch auch durch ein zusätzliches Strukturteil am Grundkörper vorgegeben werden. Durch die besonders vorteilhafte Ausgestaltung unter Verwendung von horizontalen Auflageplatten und vertikalen Auflageplatten ist es auf einfache Weise möglich eine besonders genaue Lagepositionierung der Führungsschiene zu erreichen. Insbesondere kann die Lage der Führungsschiene somit sowohl in vertikaler als auch in horizontaler Richtung feinjustiert werden, durch entsprechende Anpassung der jeweiligen horizontalen und/oder vertikalen Auflageplatten des betreffenden Auflageabschnitts. Ein Auflageabschnitt umfasst bevorzugt zumindest eine horizontale Auflageplatte und eine vertikale Auflageplatte, welche weiter bevorzugt miteinander kontaktiert sind.

Die horizontalen Auflageplatten können zur Positionierung der Führungsachse in einer Z-Richtung und die vertikalen Auflageplatten zur Positionierung der Führungsachse in einer X-Richtung vorgesehen sein.

Vorteilhaft sind die horizontalen Auflageplatten jeweils mit zumindest einer vertikalen Auflageplatte kontaktiert.

Vorteilhaft weist der Grundkörper an den Auflageabschnitten jeweils Freimachungen auf, sodass die Auflageplatten jeweils entlang der zugeordneten Freimachung austauschbar sind. Insbesondere bilden die Freimachungen in einer besonders vorteilhaften Weiterbildung eine Führungsfläche zur Führung der Auflageplatten in einer bevorzugt horizontalen Richtung hin bis zu einem Abschnitt unter der Führungsschiene. Somit bilden die Freimachungen eine Führung für die Auflageplatte in einer horizontalen Richtung. Vorteilhaft weisen die Freimachungen einen rechteckigen Querschnitt auf.

Die Freimachungen können Führungen bilden zum Einführen der jeweiligen Auflageplatten insbesondere der horizontalen Auflageplatten in einem Bereich zwischen Führungsschiene und Grundkörper.

Die Führungsschiene kann auf einer ersten vertikalen Seite mit seitlichen Andrückstücken kontaktiert sein und an der gegenüberliegenden zweiten vertikalen Seite mit vertikalen Auflageplatten kontaktiert sein, wobei die Andrückstücke bevorzugt keilförmig ausgebildet sind und jeweils zumindest eine Bohrung aufweisen. Die Führungsschiene kann somit in der horizontalen Ebene durch die seitlichen Andrückstücke sowie der der vertikalen Auflageplatte fixiert werden. Vorteilhaft weisen die Andrückstücke jeweils zumindest eine Bohrung auf zur Aufnahme einer Schraube zum Verschrauben der Andrückstücke mit einem Strukturteil des Grundkörpers bzw. dem Grundkörper oder einer Seitenfläche der Freimachung des Grundkörpers. Durch Verschraubung der Andrückstücke mit dem Grundkörper und der keilförmigen Ausgestaltung der Andrückstücke kann eine Kraft in horizontaler Richtung auf die Führungsschiene aufgebracht werden, sodass diese gegen die vertikale Auflageplatte gedrückt werden kann. Durch die Keilform der Andrückstücke kann somit eine Kraft in horizontaler Richtung auf die Führungsschiene aufgebracht werden.

Die Führungsschiene kann durch eine Schraubenverbindung am Grundkörper fixiert sein und die horizontalen Auflageplatten können die Distanzplatten der Schraubenverbindung sein. Vorteilhaft können die Auflageplatten jeweils einstückige geschliffene Distanzplatten sein und die Führungsschiene kann eine Linearführungsschiene sein.

Die Auflageplatten können direkt mit der Anlagefläche des Grundkörpers und direkt mit der Lagerfläche der Führungsschiene kontaktiert sein. Durch das direkte Kontaktieren der Auflageplatten mit der Anlagefläche des Grundkörpers und mit der Lagerfläche der Führungsschiene ist es möglich die Genauigkeitsabweichungen bei der auf dem Grundkörper montierten Führungsschiene durch Anpassung der Auflageplatten einzustellen.

Ein Präzisionsauflager zur Aufnahme einer Führungseinrichtung an einem Grundkörper einer Werkzeugmaschine kann eine Vielzahl von austauschbaren Auflageplatten aufweisen. Die Auflageplatten können Auflageabschnitte zur Kontaktierung mit der Führungseinrichtung bilden und dabei, bevorzugt parallel zueinander, am Grundkörper entlang einer Führungsachse der Führungseinrichtung positioniert sein. Die Auflageplatten können jeweils eine erste Auflagefläche zum Kontaktieren mit der Führungseinrichtung und eine zweite Auflagefläche zum Kontaktieren mit dem Grundkörper aufweisen. Bevorzugt können die Auflageplatten zum Toleranzausgleich zwischen einer Lagerfläche der Führungsschiene und einer Anlagefläche des Grundkörpers vorgesehen sein. Die Auflageplatten können bspw. einen angepassten Dickenverlauf aufweisen, der genau auf die Toleranzabweichung im zugeordneten Auflageabschnitt angepasst ist. Die Dicke der Auflageplatte kann somit entlang der Plattenbreite variieren.

Vorteilhaft können die Auflageplatten zum Ausgleichen einer Genauigkeitsabweichung wie beispielsweise der Formgenauigkeit bzw. Lagegenauigkeit der Führungsschiene und/oder des Grundkörpers entsprechend ihren Plattendicken entlang der Führungsachse positioniert sein, sodass die auf den Auflageplatten gelagerte Führungseinrichtung eine ideale Führungsposition einnimmt. Die Dicke der Auflageplatte kann eine Maßtoleranz kleiner gleich 1µm aufweisen.

Die Auflageplatten können jeweils einstückig ausgebildet sein und jeder Auflageabschnitt kann eine angepasste austauschbare Auflageplatte umfassen, welche zum Ausgleich von Formabweichungen des im jeweiligen Auflageabschnitt vorliegenden Bereichs der Führungseinrichtung und des Grundkörpers angepasst ist. Dazu kann die angepasste Auflageplatte Erhebungen und Senken an der Oberfläche aufweisen zum Erreichen eines exakten Formausgleichs.

Die erste Auflagefläche und die zweite Auflagefläche einer Auflageplatte können planparallel zueinander ausgestaltet sein und die maximale Abweichung des Abstands zwischen der ersten Auflagefläche und der zweiten Auflagefläche kann kleiner gleich 1µm sein und bevorzugt ist die Oberfläche der ersten und/oder zweiten Auflagefläche geschliffen.

Die Vielzahl der Auflageplatten kann horizontale Auflageplatten und vertikale Auflageplatten umfassen. Die horizontalen Auflageplatten können beabstandet und parallel zueinander entlang einer horizontalen Anlagefläche des Grundkörpers positionierbar sein und die vertikalen Auflageplatten können parallel zueinander entlang einer vertikalen Anlagefläche des Grundkörpers positionierbar sein.

Die horizontalen Auflageplatten können Distanzscheiben sein, die jeweils eine Öffnung zur Aufnahme einer Befestigungsschraube der Führungseinrichtung aufweisen.

Ein Verfahren zum Einstellen der Lage einer Führungsschiene einer Führungsvorrichtung kann zumindest die folgenden Schritte umfassen: Anpassen der Lage der Führungsschiene an eine vordefinierte Lage durch Formanpassung zumindest einer Auflageplatte an eine angepasste Form und/oder durch Austausch zumindest einer Auflageplatte. Durch diese vorteilhafte Ausgestaltung ist es möglich die Führungsschiene in eine ideale Position zu bringen, wobei dazu lediglich die Auflageplatten in Auflageabschnitten auszutauschen bzw. anzupassen sind, in denen eine Formabweichung bzw. eine Genauigkeitsabweichung des Grundkörpers und/oder der Führungsschiene festgestellt wurde. Das Verfahren kann zusätzlich den Schritt umfassen Bestimmen der Lage der Führungsschiene an einer Messposition beispielsweise unter Verwendung eines Messtasters oder einer Messuhr.

Das Verfahren kann zudem derart ausgestaltet sein, dass zum Anpassen der Lage der Führungsschiene, der Abstand zwischen dem Grundkörper und der Führungsschiene durch Formanpassung zumindest einer Auflageplatte an eine angepasste Form eingestellt wird. Abschnittsweise kann somit die Lage der Führungsschiene durch Anpassung der Auflageplatten angepasst werden. Bevorzugt wird die Lage der Führungsschiene in einem Zustand ermittelt, in dem die Führungsschiene am Grundkörper befestigt ist, unter Verwendung der Auflageplatten. Nach Bestimmung der Lage der eingebauten Führungsschiene kann in den Bereichen, in denen eine Lageabweichung festgestellt wurde, jeweils die Auflageplatte ausgetauscht bzw. angepasst werden entsprechend der festgestellten Abweichung. Wird beispielsweise eine positive Abweichung in einer vertikalen Richtung der Lage der Führungsschiene festgestellt, so kann beispielsweise die entsprechende Abweichung von der im Auflageabschnitt vorliegenden Auflageplatte abgetragen werden zum Ausgleich der Abweichung. Mit anderen Worten, die Auflageplatten können entsprechend der festgestellten Lageabweichung bzw. Formabweichung der Führungsschiene angepasst werden, um diese Abweichung auszugleichen.

Zumindest eine Auflageplatte kann durch ein spanendes Fertigungsverfahren in eine angepasste Form gebracht werden, insbesondere durch Schleifen zum Ausgleich der Form- und Lagetoleranz des Grundkörpers und/oder der Führungsschiene.

Zum Anpassen des Verlaufs der Führungsachse an einen idealen Verlauf, kann der Abstand zwischen Führungsschiene und Grundkörper abschnittweise angepasst werden, mittels Ersetzen zumindest einer Auflageplatte durch eine angepasste Auflageplatte, wobei die angepasste Auflageplatte zum Ausgleich von Formabweichungen des im jeweiligen Auflageabschnitt vorliegenden Teils der Führungsschiene und des Grundkörpers angepasst ist.

Zum Einstellen der Geradheit und/oder Parallelität der Führungsschiene kann der Abstand zwischen dem Grundkörper und der Führungsschiene durch Maßanpassung und/oder Formanpassung zumindest einer Auflageplatte an eine angepasste Form eingestellt werden. Somit kann die Geradheit und/oder Parallelität der Führungsschiene an einen idealen Verlauf angepasst werden.

Zum Anpassen der Lage der Führungsschiene in einer vertikalen Richtung kann der Abstand zwischen dem Grundkörper und der Führungsschiene durch Maßanpassung und/oder Formanpassung zumindest einer horizontalen Auflageplatte an eine angepasste Form eingestellt werden. Zum Anpassen der Lage der Führungsschiene in einer horizontalen Richtung kann der Abstand zwischen dem Grundkörper und der Führungsschiene durch Maßanpassung und/oder Formanpassung zumindest einer vertikalen Auflageplatte an eine angepasste Form eingestellt werden.

Das Verfahren kann zusätzlich die Schritte umfassen, Fixieren der Führungsschiene in einer horizontalen Richtung durch Verklemmung der Führungsschiene zwischen seitlichen Andrückstücken und den vertikalen Auflageplatten; und Fixieren der Führungsschiene in einer vertikalen Richtung durch eine Schraubenverbindung am Grundkörper, wobei die horizontalen Auflageplatten Distanzplatten der Schraubenverbindung sind.

Das Verfahren kann zudem vorteilhaft den Schritt umfassen, Anordnung von Auflageplatten in Abschnitten entlang der Führungsachse, wobei die Plattendicken der Auflageplatten für jeden Abschnitt derart gewählt werden, dass die Führungsschiene einem idealen Führungsverlauf angenähert wird.

Verfahren zum Verbinden einer Führungsschiene mit einem Grundkörper einer Werkzeugmaschine kann die Schritte umfassen, Platzieren von Auflageplatten in den Abschnitten entlang der Führungsachse, wobei die Plattendicke der Auflageplatten für jeden Abschnitt derart gewählt wird, dass beim Verschrauben und/oder Verklemmen der Führungsschiene mit dem Grundkörper ein Toleranzausgleich stattfindet. Insbesondere kann durch entsprechende Plattendickenwahl der Auflageplatten ein Toleranzausgleich der Toleranz der Führungsschiene und/oder des Grundkörpers erreicht werden, sodass die Führungsschiene im eingebauten Zustand, einem idealen Führungsverlauf angenähert wird.

Verwendung eines Präzisionsauflagers zur Justage der Position einer an einem Grundkörper fixierten Führungsschiene.

Verfahren zum Justieren der Position einer Führungsschiene an einem Grundkörper einer Werkzeugmaschine, wobei das Verfahren die Schritte umfasst: Bestimmen der Lage der Führungsschiene an einer Messposition mit einem Messtaster; und Anpassen der Führungsschiene an eine vordefinierte Lage durch Maßanpassung und/oder Formanpassung zumindest einer Auflageplatte an der Messposition in eine angepasste Form oder durch Austausch zumindest einer Auflageplatte.

Gemäß einer weiteren Ausgestaltung der Erfindung wird eine Präzisions-Werkzeugmaschine vorgeschlagen mit einer Führungsvorrichtung gemäß einer der vorstehenden Ausführungen. Durch entsprechende Anpassung der Auflageplatten kann die Lage der Führungsschiene zumindest in vertikaler und horizontaler Richtung abschnittsweise angepasst werden.

Kurzbeschreibung der Figuren
- Fig. 1: zeigt eine erste Ansicht der Führungsvorrichtung,
- Fig. 2: zeigt eine Querschnittsansicht der Führungsvorrichtung,
- Fig. 3: zeigt eine weitere perspektivische Ansicht der Führungsvorrichtung,
- Fig. 4: zeigt den Aufbau der Führungsvorrichtung mit abgenommener Führungsschiene, und
- Fig. 5: zeigt eine Werkzeugmaschine mit einem Messtaster zum Messen einer geometrischen Abweichung der Führungsvorrichtung.

Im Folgenden werden Ausführungsbeispiele der vorliegenden Erfindung anhand der beispielhaften Figuren detailliert beschrieben. Die Merkmale der Ausführungsbeispiele sind im Ganzen oder teilweise kombinierbar und die vorliegende Erfindung ist in keiner Weise auf die beschriebenen Ausführungsbeispiele beschränkt. Der Umfang der Erfindung ist in den beiliegenden Ansprüchen definiert.

In den Zeichnungen werden gleiche bzw. ähnliche Merkmale mit den gleichen Bezugszeichen gekennzeichnet.

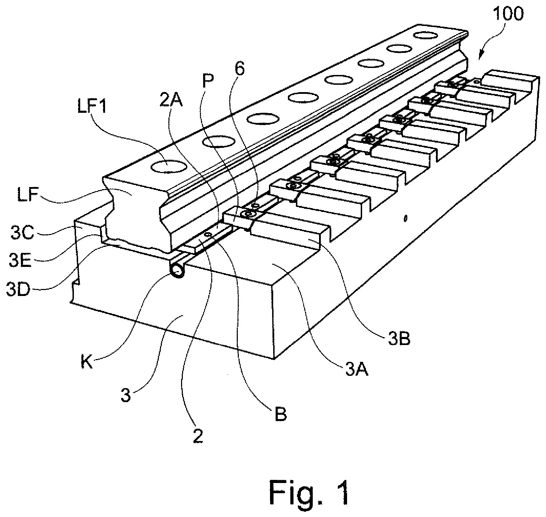

In Fig. 1 ist der Aufbau einer Führungsvorrichtung für eine Werkzeugmaschine dargestellt. Die dargestellte Führungsvorrichtung umfasst ein Präzisionsauflager 100, welches aus einer Vielzahl von austauschbaren Auflageplatten 1, 2 besteht, welche jeweils Auflageabschnitte zur Kontaktierung der Führungsschiene LF mit dem Grundkörper 3 der Werkzeugmaschine bilden.

Zur Erreichung von hohen Genauigkeiten können beispielsweise die gesamten Führungsauflagen in aufwändiger Weise geschliffen werden. Um die aufwändige und teure Nachbearbeitung der Führungsauflagen zu vermeiden, schlägt die vorliegende Erfindung die dargestellte Führungsvorrichtung mit dem Präzisionsauflager 100 vor. Durch die Präzisionsauflager mit der Vielzahl von austauschbaren Auflageplatten 1, 2, kann die Geradheit der Linearbewegung entlang der Führungsschiene verbessert werden, da Fertigungsungenauigkeiten von Auflage und Anschlag des Strukturteils, auf dem die Führungsschienen befestigt sind, durch entsprechende abschnittsweise Anpassung der austauschbaren Auflageplatten ausgeglichen werden kann.

Somit wird die Linearführungsschiene auf bspw. geschliffenen (oder geschabten) Auflageplatten (Abstimmplatten) montiert. Im fertigen Zustand der Maschine kann dann die Geometrie optimiert werden, indem in einzelnen Schienenabschnitten die Auflageplatten 1, 2 ausgetauscht und/oder angepasst werden. Somit ermöglicht die erfindungsgemäße Führungsvorrichtung eine wesentliche Erhöhung der Genauigkeit der Linearführungsschiene, welche erreichbar ist ohne die Demontage der gesamten Schiene oder des Tisches, da lediglich die einzelnen Auflageplatten der jeweiligen Abschnitte ausgetauscht werden. Die Führungsgenauigkeit der Linearführungsschiene kann somit stark verbessert werden.

Wie in Fig. 1 dargestellt, ist die Führungsschiene LF, welche bevorzugt eine Linearführungsschiene ist, am Grundkörper 3 mittels Auflageplatten 1, 2 positioniert. Zur Fixierung der Führungsschiene LF sind Befestigungsbohrungen LF1 (bspw. Sackloch) an der Führungsschiene LF vorgesehen, durch welche Befestigungsschrauben hindurchgeführt werden können zum Verschrauben der Führungsschiene LF am Grundkörper 3. Bevorzugt ist für jede Befestigungsschraube 5, welche durch die jeweilige Befestigungsbohrung LF1 eingeführt wird, eine Auflageplatte 1, 2 zugewiesen. Mit anderen Worten, wie in Fig. 1 dargestellt, sind beispielsweise acht Öffnungen an der Führungsschiene LF vorgesehen für acht Befestigungsschrauben 5 zur Befestigung der Linearführungsschiene LF am Grundkörper 3.

Jede dieser Befestigungsschrauben 5 wird im Bereich einer Auflageplatte 2, welche eine horizontale Auflageplatte ist, vorgesehen. Die horizontalen Auflageplatten 2 weisen jeweils bevorzugt eine Bohrung auf, durch welche die Befestigungsschraube 5 der Führungsschiene LF hindurchgeführt werden kann. Durch Anziehen der Befestigungsschraube 5 ist es möglich, die Führungsschiene LF mittels Auflageplatten 1, 2 am Grundkörper 3 zu fixieren.

Die horizontalen Auflageplatten 2 weisen jeweils eine erste und zweite Auflagefläche 2A und 2B auf. Über diese Auflageflächen 2A und 2B der horizontalen Auflageplatte 2 wird einerseits die Anlagefläche des Grundkörpers 3 kontaktiert und andererseits die Auflagefläche der Führungsschiene LF. Insbesondere weist der Grundkörper 3 die horizontale Anlagefläche 3D auf sowie die vertikale Anlagefläche 3E. Wie in Fig. 1 dargestellt, grenzen diese Anlageflächen bevorzugt aneinander. Die horizontale Auflageplatte 2 wird an der horizontalen Anlagefläche 3D des Grundkörpers 3 aufgelegt. Die vertikalen Auflageplatten 1 werden wiederum in Kontakt mit den vertikalen Anlageflächen 3E des Grundkörpers 3 gebracht zum Bilden einer vertikalen Kontaktfläche für die Positionierung und Fixierung der Führungsschiene LF.

Die horizontalen Auflageplatten 2 können über jeweilige Freimachungen 3A des Grundkörpers 3 aus der Auflageposition entnommen werden. Die Freimachungen 3A ermöglichen einerseits ein leichtes Einfügen bzw. Herausziehen der horizontalen Auflageplatten 2 und andererseits auch eine genaue Führung der horizontalen Auflageplatten beim Einsetz- bzw. Entnahmevorgang. Die horizontalen Auflageplatten 2 weisen jeweils eine Öffnung bzw. Eingreifbohrung B auf, welche zur vereinfachten Entnahme der horizontalen Auflageplatten 2 vorgesehen sind. Im Bereich der horizontalen Anlagefläche 3D des Grundkörpers 3 ist zudem ein Kühlrohr K vorgesehen, welches längs entlang der Führungsschiene LF vorgesehen ist zum optimalen Kühlen der Schiene damit die Temperatur konstant bleibt und kein temperaturbedingter Verzug auftritt.

Wie in Fig. 1 ersichtlich, ist die Führungsschiene LF auf einer Vielzahl von horizontalen Auflageplatten 2 positioniert. Zur Fixierung dieser horizontalen Auflageplatten 2 werden die Befestigungsschrauben 5 durch die Befestigungsbohrung LF1 der Führungsschiene LF hindurchgeführt und fixiert.

In der Ausgangskonfiguration ist die Führungsschiene LF an einheitlichen, noch nicht angepassten Auflageplatten am Grundkörper 3 montiert. Dann kann die Führungsschiene vermessen werden. Wird nun eine geometrische Abweichung der am Grundkörper vorgesehenen Führungsschiene LF festgestellt, beispielsweise durch eine entsprechende Formbestimmung und Lagebestimmung mittels eines Messtasters M, so kann zum Ausgleich der Abweichung die horizontale Auflageplatte 2 im betreffenden Abschnitt ausgetauscht werden und durch eine beispielsweise dickere oder dünnere oder individuell geschliffene Auflageplatte ersetzt werden. Somit ist es möglich gezielt in bestimmten Abschnitten die Positionierung der Führungsschiene LF zu verbessern, ohne die gesamte Führungsschiene abbauen zu müssen.

Durch entsprechenden Austausch der horizontalen Auflageplatten 2, ist es möglich zumindest eine vertikale Abweichung der Führungsschiene LF auszugleichen. Eine solche Abweichung kann sich einerseits aufgrund der Ungenauigkeiten der Verbindung des Grundkörpers 3 mit der Führungsschiene LF ergeben und andererseits aufgrund von Herstellungsungenauigkeiten der Teile. Zum Ausgleich der Toleranzen und zum Anpassen der Lage der Führungsschiene LF an eine ideale Lage bzw. Position, kann vorteilhafterweise ein abschnittweises Austauschen und Anpassen der horizontalen Auflageplatten 2 (und/oder vertikalen Auflageplatte 1) erfolgen. Als Resultat ist es möglich eine Lagerung der Führungsschiene LF in vertikaler Richtung zu erreichen, welche möglichst nahe an einem idealen Verlauf liegt, sodass eine sehr hohe Geradheit der Führungsschiene LF erreicht werden kann.

Der Grundkörper 3, wie in Fig. 1 dargestellt, weist zudem den Vorsprung 3C auf, welcher die vertikale Anlagefläche 3E bildet zum Kontaktieren mit den vertikalen Auflageplatten 1. Analog zur Justage durch Austausch der horizontalen Auflageplatten 2, können auch die vertikalen Auflageplatten 1 entsprechend ausgetauscht werden, um die Positionierung der Führungsschiene LF in der horizontalen Ebene zu optimieren bzw. die vorliegenden Toleranzen auszugleichen.

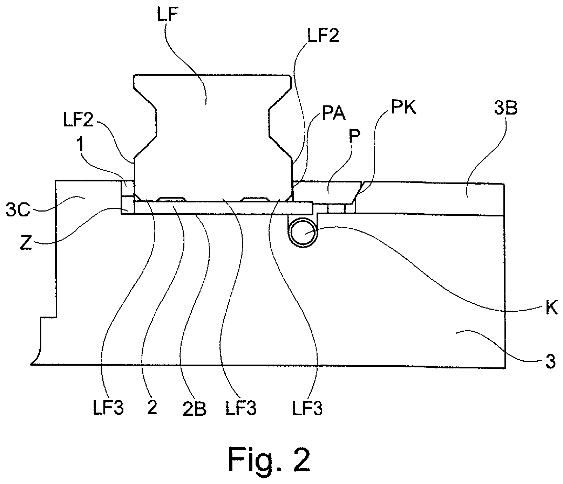

Die Fixierung der Führungsschiene LF in der horizontalen Ebene kann über die Andrückstücke P erreicht werden. Die Andrückstücke P werden, wie in Fig. 1 dargestellt, im Bereich der Vorsprünge 3B des Grundkörpers 3 vorgesehen. Insbesondere an einer bevorzugt schräg verlaufenden Seitenfläche des Vorsprungs 3B des Grundkörpers 3 ist jeweils ein Andrückstück P vorgesehen, welches über eine Schraube 6 mit dem Grundkörper 3 verschraubt werden kann. Das Andrückstück P ist mit einer Fläche in Kontakt mit einer vertikalen Seitenfläche der Führungsschiene LF und mit der gegenüberliegenden Fläche (welche bevorzugt eine keilförmige Fläche ist) in Kontakt mit einer Stirnfläche des Vorsprungs 3B. Die Vorsprünge 3B des Grundkörpers 3 bilden die Abgrenzung zwischen zwei benachbarten Freimachungen 3A. Die Vorsprünge 3B mit den jeweiligen Andrückstücken P sind parallel zueinander entlang der Längsachse der Führungsschiene LF angeordnet. Durch die Verschraubung des Andrückstücks P am Grundkörper, wird eine horizontale Kraft erzeugt, welche die Führungsschiene LF in horizontaler Richtung hin zu dem Vorsprung 3C des Grundkörpers 3 presst bzw. den davor angeordneten vertikalen Auflageplatten 1, wie in Fig. 2 dargestellt.

In Fig. 2 ist eine Querschnittsdarstellung der Führungsvorrichtung gezeigt. Für die vertikale Positionierung bzw. für den Ausgleich der Toleranzen in vertikaler Richtung, sind die horizontalen Auflageplatten 2 vorgesehen. Die erste und zweite Auflagefläche 2A, 2B der horizontalen Auflageplatte 2 bilden die direkten Kontaktflächen zwischen Grundkörper 3 und der Führungsschiene LF. Im exemplarischen Beispiel in Fig. 2 weist die Führungsschiene LF als horizontale Lagerfläche LF3, drei zueinander parallel angeordnete Flächen auf, welche entlang der Längsachse der Führungsschiene LF verlaufen. Diese horizontalen Lagerflächen LF3 sind mit der (oberen) Auflagefläche 2A der horizontalen Auflageplatten in Kontakt. Durch die Befestigungsschrauben 5 der Führungsschiene LF kann die Führungsschiene LF auf die horizontalen Auflageplatten 2 gedrückt werden. Die Dicke bzw. der Dickenverlauf der horizontalen Auflageplatten 2 bestimmt die vertikale Position der Führungsschiene LF. Liegt nun beispielsweise eine Abweichung in vertikaler Richtung von einem ermittelten Differenzbetrag bezüglich der idealen Position der Führungsschiene LF vor, so kann nun zum Ausgleich dieser Differenz, die Dicke der horizontalen Auflageplatten 2 entsprechend dem ermittelten Differenzbetrag angepasst werden. Die Führungsschiene LF kann somit auf einfache Weise in die ideale Position gebracht werden. Vorteilhaft geschieht dies auch abschnittweise, sodass eine komplette Demontage der Führungsschiene LF überflüssig ist.

Auch für die Positionierung der Führungsschiene LF in horizontaler Richtung, unter Verwendung der vertikalen Auflageplatten 1, ist durch entsprechende Gestaltung der Dicke der vertikalen Auflageplatten bzw. der genauen Form der vertikalen Auflageplatten eine Positionierung der Führungsschiene LF in der horizontalen Ebene möglich. Wie in Fig. 2 dargestellt, sind vertikale Auflageplatten 1 zwischen der Führungsschiene LF und dem Vorsprung 3C des Grundkörpers 3 vorgesehen. Die vertikale Anlagefläche 3E des Vorsprungs 3C des Grundkörpers 3 bildet die erste Kontaktfläche der vertikalen Auflageplatte 1. Gegenüberliegend kontaktiert die vertikale Auflageplatte 1 die vertikale Lagerfläche LF2 der Führungsschiene LF. Auf der gegenüberliegenden Seite der Führungsschiene LF wiederum kontaktiert das Andrückstück P mit der Andrückfläche PA die vertikale Lagerfläche LF2 der Führungsschiene.

Durch die Verschraubung des Andrückstücks P wird ein Verklemmen bzw. Verpressen der Führungsschiene LF und somit eine Fixierung in horizontaler Richtung erreicht. Die horizontale Klemmkraft der Andrückstücke P wird beispielsweise durch Vorsehen einer schrägen Seitenfläche PK erreicht. Diese schräge Seitenfläche PK greift in die keilförmige Fläche des Vorsprungs 3B ein und bei Verschraubung der Andrückstücke P mit dem Grundkörper 3 wird eine horizontale Klemmkraft erzeugt, welche die Führungsschiene LF zwischen dem seitlichen Andrückstrück P und der vertikalen Auflageplatte 1 fixiert.

Wird nun eine Abweichung der Position der Führungsschiene LF in horizontaler Richtung festgestellt, so kann durch geeignete Wahl der vertikalen Auflageplatten 1 eine abschnittweise Verschiebung der Führungsschiene LF bewirkt werden, um letztlich die Führungsschiene LF in eine ideale Position zu bringen. zwischens

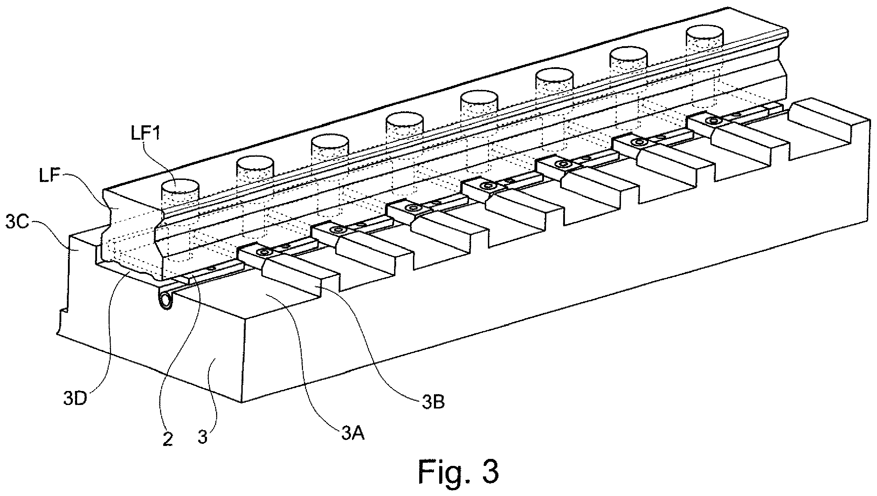

In Fig. 3 ist eine weitere Ansicht der Führungsvorrichtung dargestellt. Die Führungsschiene LF weist die Befestigungsbohrungen LF1 auf, welche jeweils einer horizontalen Auflageplatte 2 zugeordnet sind zur Ausbildung eines Auflageabschnitts. Für den Austausch einer horizontalen Auflageplatte 2 werden diese über die Freimachung 3A, nach Entfernung der Befestigungsschraube der Führungsschiene LF aus der Befestigungsbohrung LF1, aus dem Zwischenbereich zwischen Führungsschiene LF und dem Grundkörper 3 herausgezogen.

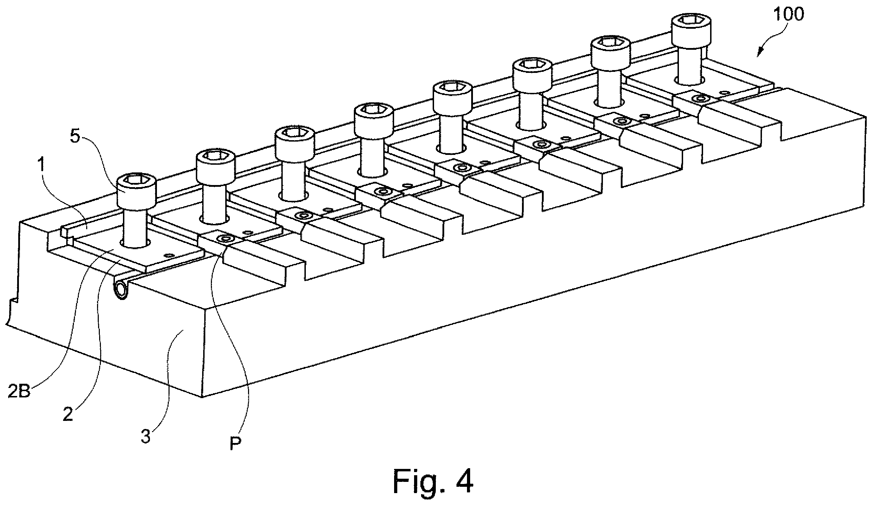

Fig.4 zeigt eine Darstellung der Führungsvorrichtung, wobei die Führungsschiene LF entfernt ist zur verbesserten Darstellung der vertikalen und horizontalen Auflageplatten 1, 2. Wie aus Fig. 4 ersichtlich, sind die Befestigungsschrauben 5 vorgesehen, welche üblicherweise zur Fixierung der Führungsschiene LF dienen. Diese Schrauben 5 werden durch Öffnungen der horizontalen Auflageplatten 2 hindurchgeführt, um mit dem Gewinde des Grundkörpers 3 einzugreifen und letztlich die Führungsschiene LF zu fixieren. Die horizontalen Auflageplatten 2 dienen zur Positionierung der Führungsachse in einer Z-Richtung und die vertikalen Auflageplatten 1 dienen zur Positionierung der Führungsachse in einer X-Richtung.

Bevorzugt sind die horizontalen Auflageplatten 2 rechteckige Platten mit geschliffener Oberfläche, welche einstückig ausgebildet sind. Besonders vorteilhaft kann sowohl die Oberseite als auch die Unterseite der jeweiligen Auflageplatten geschliffen sein. Die horizontalen Auflageplatten 2 umfassen zudem eine Bohrung zur erleichterten Entnahme der Platten aus dem Zwischenraum zwischen Führungsschiene LF und Grundkörper 3. Alternativ oder zusätzlich können auch weitere Entnahmehilfen vorgesehen sein, wie bspw. eine Schwalbenschwanzführung.

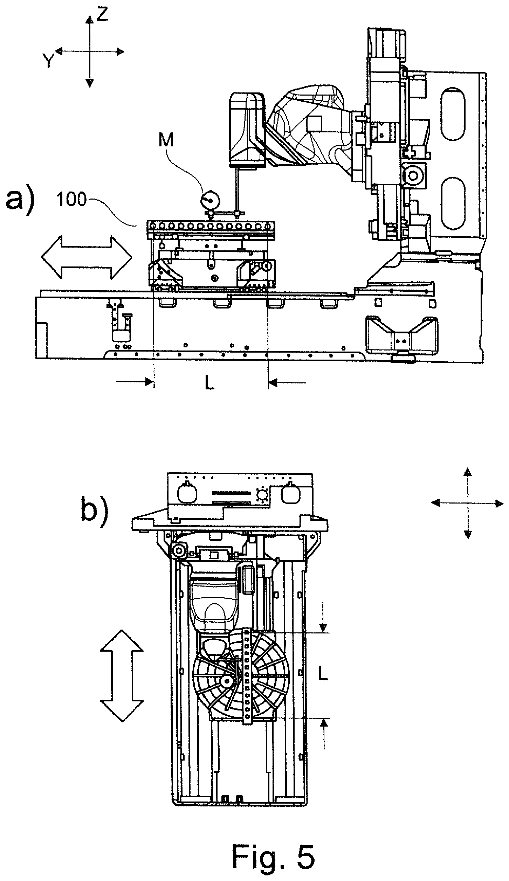

Fig. 5 zeigt die beispielhafte Bestimmung der Genauigkeitsabweichung einer Führungsschiene an einer Werkzeugmaschine. Beispielsweise ist ein Messtaster M vorgesehen, welcher entlang der Führungsschiene LF entlangbewegt werden kann zum Aufzeichnen von Formabweichungen.

Zur Justage der Lage der Führungsschiene kann in einem ersten Schritt beispielsweise mittels eines Messtasters M eine Messposition an der Führungsschiene beispielsweise entlang der in Fig. 5 dargestellten Y-Achse angefahren werden. Durch Ermittlung der geometrischen Abweichung ist es dann möglich ein Anpassen der Lage der Führungsschiene an eine vordefinierte, ideale Lage durch Formanpassung zumindest einer Auflageplatte an eine angepasste Form und/oder durch Austausch zumindest einer Auflageplatte erreicht werden. Die Auflageplatte kann beispielsweise durch eine spanendes Fertigungsverfahren in eine angepasste Form gebracht werden, insbesondere durch Schleifen, zum Ausgleich der Formabweichungen des Grundkörpers und/oder der Führungsschiene.

Insbesondere können Formabweichungen der Führungsschiene von der idealen Position festgestellt werden. Diese Abweichungen wiederum können durch entsprechende Ausgestaltung der horizontalen Auflageplatten ausgeglichen werden. Beispielsweise können die Auflageplatten in bestimmten Bereichen dünner ausgestaltet werden, sodass eine vertikale Abweichung der Führungsschiene ausgeglichen werden kann. Somit lassen sich lokale geometrische Fehler der Geradlinigkeit und/oder Parallelität der Führungsschiene kompensieren.

Die Führungsschiene kann mithilfe der vertikalen und horizontalen Auflageplatten beispielsweise auch in einen gewünschten Schwenk- bzw. Biegegrad versetzt werden, um eine lokale Verlagerung der Führungsschiene zu erreichen. Vorteilhaft weisen die Auflageplatten plane Oberflächen auf sowohl an der Oberseite und Unterseite als auch an allen Seitenflächen. Die vertikalen Auflageplatten 1 können bevorzugt bohrungsfrei ausgestaltet werden, da insbesondere eine Bohrung überflüssig ist, da die Fixierung der vertikalen Auflageplatten 1 durch die Fixierung über die Verklemmung mittels Andrückstücken P erfolgt.

Somit ist es möglich durch die vorliegenden Erfindung eine vorteilhafte Führungsvorrichtung bereitzustellen, die leicht justiert werden kann um beispielsweise geometrische Ungenauigkeiten zu kompensieren. Insbesondere ist es dadurch auch möglich, die Anforderungen an die Herstellungs- und Montagegenauigkeit des Grundkörpers 3 und/oder der Führungsschiene zu reduzieren.

Als Führungsschienen können unterschiedliche Formen oder Profile verwendet werden. Beispielsweise können Profile für Flachführungen, Schwalbenschwanzführungen, Prismenführungen etc. verwendet werden. Zu der Führungseinrichtung im Sinne der Erfindung können beispielsweise auch Zahnstangenelemente eines Ritzel-Zahnstangensystems oder andere längliche Komponenten eines Antriebssystems zusammengefasst werden.

## Patentansprüche

1. Führungsvorrichtung, insbesondere für eine Werkzeugmaschine, mit
- einem Grundkörper (3), der zumindest eine Anlagefläche aufweist,
- einer Führungsschiene (LF) mit zumindest einer Lagerfläche und einer Führungsachse und
- einem Präzisionsauflager (100), das eine Vielzahl von austauschbaren Auflageplatten (1; 2) zur Positionierung der Führungsschiene (LF) am Grundkörper (3) umfasst;
wobei die Auflageplatten (1; 2) entlang der Führungsachse zum Einstellen definierter Abstände zwischen der Lagerfläche der Führungsschiene (LF) und der Anlagefläche des Grundkörpers (3) angeordnet sind; **dadurch gekennzeichnet, dass**
die Vielzahl der Auflageplatten (1; 2) horizontale Auflageplatten (2) und vertikale Auflageplatten (1) umfasst und die horizontalen Auflageplatten (2) beabstandet und parallel zueinander entlang einer horizontalen Anlagefläche des Grundkörpers (3) vorgesehen sind und die vertikalen Auflageplatten (1) parallel zueinander entlang einer vertikalen Anlagefläche am Grundkörper (3) vorgesehen sind.

2. Führungsvorrichtung nach Anspruch 1, wobei die Auflageplatten (1; 2) entsprechend ihrer jeweiligen Plattendicke derart entlang der Führungsachse angeordnet sind, dass eine Form- und/oder Lage- Genauigkeitsabweichung der Führungsschiene (LF) und/oder des Grundkörpers (3) ausgeglichen wird und die auf den Auflageplatten (1; 2) aufliegende Führungsschiene (LF) in einer vorbestimmbaren idealen Führungsposition vorliegt.

3. Führungsvorrichtung nach zumindest einem der Ansprüche 1 oder 2, wobei mehrere Auflageabschnitte entlang der Führungsschiene (LF) vorliegen und in jedem Auflageabschnitt eine Auflageplatte (1; 2) vorgesehen ist und der Abstand zwischen Führungsschiene (LF) und Grundkörper (3) im jeweiligen Auflageabschnitt durch die Dicke der im Auflageabschnitt vorgesehenen Auflageplatte (1; 2) bestimmt wird.

4. Führungsvorrichtung nach zumindest einem der vorhergehenden Ansprüche, wobei der Grundkörper (3) an den Auflageabschnitten jeweils Freimachungen (3A) aufweist, sodass die Auflageplatten (1; 2) entlang der Freimachungen (3A) austauschbar sind.

5. Führungsvorrichtung nach zumindest einem der vorhergehenden Ansprüche, wobei die Führungsschiene (LF) auf einer ersten vertikalen Seite mit seitlichen Andrückstücken (P) kontaktiert ist und an der gegenüberliegenden zweiten vertikalen Seite mit den vertikalen Auflageplatten (1) kontaktiert ist, und wobei die Andrückstücke bevorzugt keilförmig ausgebildet sind und zumindest eine Bohrung aufweisen; und/oder wobei die Auglageplatten (1; 2) jeweils einstückige, geschliffene, Distanzplatten sind und die Führungsschiene (LF) bevorzugt eine Linearführungsschiene ist.

6. Präzisionsauflager (100) einer Führungsvorrichtung nach einem der Ansprüche 1 bis 5, wobei das Präzisionsauflager zur Aufnahme einer Führungsschiene (LF) an einem Grundkörper (3) der Führungsvorrichtung ausgebildet ist, wobei der Grundkörper (3) ein Strukturteil einer Werkzeugmaschine sein kann, mit
- einer Vielzahl von austauschbaren Auflageplatten (1; 2), welche Auflageabschnitte zur Kontaktierung mit der Führungsschiene (LF) bilden und dabei am Grundkörper (3), entlang einer Führungsachse der Führungsschiene (LF) g, positioniert sind;
wobei die Auflageplatten (1; 2) jeweils eine erste Auflagefläche zum Kontaktieren mit der Führungsschiene (LF) und eine zweite Auflagefläche zum Kontaktieren mit dem Grundkörper (3) aufweisen und die Auflageplatten (1; 2) zum Toleranzausgleich zwischen einer Lagerfläche der Führungsschiene (LF) und einer Anlagefläche des Grundkörpers (3) vorgesehen sind; **dadurch gekennzeichnet, dass**
die Vielzahl der Auflageplatten (1; 2) horizontale Auflageplatten (2) und vertikale Auflageplatten (1) umfasst und die horizontalen Auflageplatten (2) beabstandet und parallel zueinander entlang einer horizontalen Anlagefläche des Grundkörpers (3) vorgesehen sind und die vertikalen Auflageplatten (1) parallel zueinander entlang einer vertikalen Anlagefläche am Grundkörper (3) vorgesehen sind.

7. Präzisionsauflager nach Anspruch 6, wobei die Auflageplatten (1; 2) zum Ausgleichen einer Genauigkeitsabweichung der Führungsschiene (LF) und/oder des Grundkörpers (3), entsprechend ihrer Plattendicken entlang der Führungsachse positioniert sind, sodass die auf den Auflageplatten (1; 2) gelagerte Führungsschiene (LF) in eine ideale Führungsposition gebracht wird.

8. Präzisionsauflager nach zumindest einem der Ansprüche 6 oder 7, wobei die erste Auflagefläche und die zweite Auflagefläche einer Auflageplatte (1; 2) planparallel zueinander ausgestaltet sind und die maximale Abweichung des Abstands zwischen der ersten Auflagefläche und der zweiten Auflagefläche kleiner gleich 1 µm ist und bevorzugt die Oberfläche der ersten und/oder zweiten Auflagerfläche geschliffen ist; und/oder wobei die horizontalen Auflageplatten (2) Distanzscheiben sind die jeweils eine Öffnung zur Aufnahme einer Befestigungsschraube (5) der Führungsschiene (LF) aufweisen.

9. Verfahren zum Einstellen der Lage einer Führungsschiene (LF) einer Führungsvorrichtung nach zumindest einem der Ansprüche 1 bis 5, **gekennzeichnet durch** die Schritte:
Anpassen der Lage der Führungsschiene (LF) an eine vordefinierte Lage durch Formanpassung zumindest einer Auflageplatte (1; 2) in eine angepasste Form und/oder durch Austausch zumindest einer Auflageplatte (1; 2).

10. Verfahren nach Anspruch 9, wobei zum Anpassen der Lage der Führungsschiene (LF), der Abstand zwischen dem Grundkörper (3) und der Führungsschiene (LF) durch Formanpassung zumindest einer Auflageplatte (1; 2) in eine angepasste Form eingestellt wird; und/oder wobei die zumindest eine Auflageplatte (1; 2) durch ein spanendes Fertigungsverfahren in eine angepasste Form gebracht wird, insbesondere durch Schleifen zum Ausgleich der Form und Lagetoleranz des Grundkörpers (3) und/oder der Führungsschiene (LF).

11. Verfahren nach zumindest einem der Ansprüche 9 bis 10, wobei zum Anpassen des Verlaufs der Führungsachse an einen idealen Verlauf der Abstand zwischen Führungsschiene (LF) und Grundkörper (3) abschnittsweise angepasst wird, mittels Ersetzen zumindest einer Auflageplatte (1; 2) durch eine angepasste Auflageplatte (1; 2), wobei
die angepasste Auflageplatte (1; 2) zum Ausgleich von Formabweichungen des im jeweiligen Auflageabschnitt vorliegenden Teils der Führungsschiene (LF) und des Grundkörpers (3) angepasst ist; und/oder wobei zum Anpassen der Lage der Führungsschiene (LF) in einer vertikalen Richtung, der Abstand zwischen dem Grundkörper (3) und der Führungsschiene (LF) durch Formanpassung zumindest einer horizontalen Auflageplatte (1; 2) an eine angepasste Form eingestellt wird und wobei zum Anpassen der Lage der Führungsschiene (LF) in einer horizontalen Richtung der Abstand zwischen dem Grundkörper (3) und der Führungsschiene (LF) durch Formanpassung zumindest einer vertikalen Auflageplatte (1; 2) an eine angepasste Form eingestellt wird.

12. Verfahren nach zumindest einem der Ansprüche 9 bis 11, umfassend die Schritte:
- Fixieren der Führungsschiene (LF) in einer horizontalen Richtung durch Verklemmung der Führungsschiene (LF) zwischen seitlichen Andrückstücken (P) und den vertikalen Auflageplatten (1); und
- Fixieren der Führungsschiene (LF) in einer vertikalen Richtung durch eine Schraubenverbindung am Grundkörper (3) wobei die horizontalen Auflageplatten (2) Distanzplatten der Schraubenverbindung sind.

13. Verfahren zum Verbinden einer Führungsschiene (LF) mit einem Grundkörper (3) einer Führungsvorrichtung nach zumindest einem der Ansprüche 1 bis 5 **gekennzeichnet durch** den Schritt: Platzieren von Auflageplatten (1; 2) in Abschnitten entlang der Führungsachse, wobei die Plattendicke der Auflageplatten (1; 2) für jeden Abschnitt derart gewählt wird, dass beim Verschrauben und/oder Verklemmen der Führungsschiene (LF) mit dem Grundkörper (3) ein Toleranzausgleich stattfindet.

14. Verfahren zum Justieren der Position einer Führungsschiene (LF) an einem Grundkörper (3) einer Führungsvorrichtung nach zumindest einem der Ansprüche 1 bis 5, wobei das Verfahren **gekennzeichnet ist durch** die Schritte:
Bestimmen der Lage der Führungsschiene (LF) an einer Messposition mit einem Messtaster, und
Anpassen der Lage der Führungsschiene (LF) an eine vordefinierte Lage durch Anpassung zumindest einer Auflageplatte (1; 2) an der Messposition an eine angepasste Form und/oder durch Austausch zumindest einer Auflageplatte (1; 2).

## Claims

1. Guide device, in particular for a machine tool, comprising
- a base body (3) which has at least one contact surface,
- a guide rail (LF) with at least one bearing surface and a guide axis, and
- a precision support (100) which comprises
a plurality of exchangeable support plates (1; 2) for positioning the guide rail (LF) on the base body (3);
wherein the support plates (1; 2) are arranged along the guide axis for setting defined distances between the bearing surface of the guide rail (LF) and the contact surface of the base body (3); **characterized in that**
the plurality of support plates (1; 2) comprises horizontal support plates (2) and vertical support plates (1), and the horizontal support plates (2) are provided spaced apart and parallel to one another along a horizontal contact surface of the base body (3), and the vertical support plates (1) are provided parallel to one another along a vertical contact surface on the base body (3).

2. Guide device according to Claim 1, wherein the support plates (1; 2) are arranged along the guide axis in accordance with their respective plate thickness in such a way that a deviation in shape and/or positional accuracy of the guide rail (LF) and/or of the base body (3) is compensated for, and the guide rail (LF) resting on the support plates (1; 2) is present in a predeterminable ideal guide position.

3. Guide device according to at least one of Claims 1 and 2, wherein a plurality of support sections are present along the guide rail (LF), and a support plate (1; 2) is provided in each support section, and the distance between the guide rail (LF) and the base body (3) in the respective support section is determined by the thickness of the support plate (1; 2) provided in the support section.

4. Guide device according to at least one of the preceding claims, wherein the base body (3) has clearances (3A) in each case on the support sections, such that the support plates (1; 2) are exchangeable along the clearances (3A).

5. Guide device according to at least one of the preceding claims, wherein the guide rail (LF) is contacted with lateral pressure pieces (P) on a first vertical side and is contacted with the vertical support plates (1) on the opposite second vertical side, and wherein the pressure pieces are preferably of wedge-shaped design and have at least one bore; and/or wherein the support plates (1; 2) are in each case integral, ground, spacer plates, and the guide rail (LF) is preferably a linear guide rail.

6. Precision support (100) of a guide device according to one of Claims 1 to 5, wherein the precision support is designed for receiving a guide rail (LF) on a base body (3) of the guide device, wherein the base body (3) can be a structural part of a machine tool, comprising
- a plurality of exchangeable support plates (1; 2), which form support sections for contacting with the guide rail (LF) and are positioned here on the base body (3), along a guide axis of the guide rail (LF);
wherein the support plates (1; 2) have in each case a first support surface for contacting with the guide rail (LF) and a second support surface for contacting with the base body (3), and the support plates (1; 2) are provided for tolerance compensation between a bearing surface of the guide rail (LF) and a contact surface of the base body (3); **characterized in that**
the plurality of support plates (1; 2) comprises horizontal support plates (2) and vertical support plates (1), and the horizontal support plates (2) are provided spaced apart and parallel to one another along a horizontal contact surface of the base body (3), and the vertical support plates (1) are provided parallel to one another along a vertical contact surface on the base body (3).

7. Precision support according to Claim 6, wherein the support plates (1; 2) are positioned along the guide axis for compensating for a deviation in accuracy of the guide rail (LF) and/or of the base body (3), in accordance with their plate thicknesses, such that the guide rail (LF) mounted on the support plates (1; 2) is brought into an ideal guide position.

8. Precision support according to at least one of Claims 6 and 7, wherein the first support surface and the second support surface of a support plate (1; 2) are of plane-parallel design with respect to one another, and the maximum deviation in the distance between the first support surface and the second support surface is less than or equal to 1 µm, and the surface of the first and/or second support surface is preferably ground; and/or wherein the horizontal support plates (2) are spacer plates which have in each case an opening for receiving a fastening screw (5) of the guide rail (LF).

9. Method for setting the position of a guide rail (LF) of a guide device according to at least one of Claims 1 to 5, **characterized by** the steps of:
adapting the position of the guide rail (LF) to a predefined position by adapting the shape of at least one support plate (1; 2) to an adapted shape and/or by replacing at least one support plate (1; 2).

10. Method according to Claim 9, wherein, in order to adapt the position of the guide rail (LF), the distance between the base body (3) and the guide rail (LF) is set by adapting the shape of at least one support plate (1; 2) to an adapted shape; and/or wherein the at least one support plate (1; 2) is brought to an adapted shape by a machining production method, in particular by grinding, in order to compensate for the shape and positional tolerance of the base body (3) and/or of the guide rail (LF).

11. Method according to at least one of Claims 9 to 10, wherein, in order to adapt the profile of the guide axis to an ideal profile, the distance between the guide rail (LF) and the base body (3) is adapted in sections, by means of replacing at least one support plate (1; 2) by an adapted support plate (1; 2), wherein the adapted support plate (1; 2) is adapted for compensating for deviations in shape of that part of the guide rail (LF) and of the base body (3) which is present in the respective support section; and/or wherein, in order to adapt the position of the guide rail (LF) in a vertical direction, the distance between the base body (3) and the guide rail (LF) is set by adapting the shape of at least one horizontal support plate (1; 2) to an adapted shape, and wherein, in order to adapt the position of the guide rail (LF) in a horizontal direction, the distance between the base body (3) and the guide rail (LF) is set by adapting the shape of at least one vertical support plate (1; 2) to an adapted shape.

12. Method according to at least one of Claims 9 to 11, comprising the steps of:
- fixing the guide rail (LF) in a horizontal direction by clamping the guide rail (LF) between lateral pressure pieces (P) and the vertical support plates (1); and
- fixing the guide rail (LF) in a vertical direction by means of a screw connection on the base body (3), wherein the horizontal support plates (2) are spacer plates of the screw connection.

13. Method for connecting a guide rail (LF) to a base body (3) of a guide device according to at least one of Claims 1 to 5, **characterized by** the step of:
placing support plates (1; 2) in sections along the guide axis, wherein the plate thickness of the support plates (1; 2) is selected for each section in such a way that tolerance compensation takes place when the guide rail (LF) is screwed and/or clamped to the base body (3).

14. Method for adjusting the position of a guide rail (LF) on a base body (3) of a guide device according to at least one of Claims 1 to 5, wherein the method is **characterized by** the steps of:
determining the position of the guide rail (LF) at a measuring position using a measuring probe, and
adapting the position of the guide rail (LF) to a predefined position by adapting at least one support plate (1; 2) at the measuring position to an adapted shape and/or by replacing at least one support plate (1; 2).

## Revendications

1. Dispositif de guidage, en particulier pour une machine-outil, comprenant
- un corps de base (3) qui présente au moins une surface d'appui,
- un rail de guidage (LF) avec au moins une surface de palier et un axe de guidage et
- un support de précision (100) qui comprend
une pluralité de plaques d'appui (1 ; 2) remplaçables pour le positionnement du rail de guidage (LF) sur le corps de base (3) ;
les plaques d'appui (1 ; 2) étant disposées le long de l'axe de guidage pour le réglage de distances définies entre la surface de palier du rail de guidage (LF) et la surface d'appui du corps de base (3) ; **caractérisé en ce que**
la pluralité de plaques d'appui (1 ; 2) comprend des plaques d'appui horizontales (2) et des plaques d'appui verticales (1) et les plaques d'appui horizontales (2) sont prévues à distance et parallèlement les unes aux autres le long d'une surface d'appui horizontale du corps de base (3) et les plaques d'appui verticales (1) sont prévues parallèlement les unes aux autres le long d'une surface d'appui verticale sur le corps de base (3).

2. Dispositif de guidage selon la revendication 1, dans lequel les plaques d'appui (1 ; 2) sont disposées le long de l'axe de guidage en fonction de leur épaisseur de plaque respective de telle sorte qu'un écart de précision de forme et/ou de position du rail de guidage (LF) et/ou du corps de base (3) est compensé et le rail de guidage (LF) reposant sur les plaques d'appui (1 ; 2) se trouve dans une position de guidage idéale prédéterminable.

3. Dispositif de guidage selon au moins l'une quelconque des revendications 1 ou 2, dans lequel plusieurs sections d'appui se trouvent le long du rail de guidage (LF) et une plaque d'appui (1 ; 2) est prévue dans chaque section d'appui et la distance entre le rail de guidage (LF) et le corps de base (3) dans la section d'appui respective est déterminée par l'épaisseur de la plaque d'appui (1 ; 2) prévue dans la section d'appui.

4. Dispositif de guidage selon au moins l'une quelconque des revendications précédentes, dans lequel le corps de base (3) présente des dégagements (3A) au niveau des sections d'appui respectives de telle sorte que les plaques d'appui (1 ; 2) sont remplaçables le long des dégagements (3A).

5. Dispositif de guidage selon au moins l'une quelconque des revendications précédentes, dans lequel le rail de guidage (LF) est mis en contact avec des pièces de pression latérales (P) sur un premier côté vertical et est mis en contact avec les plaques d'appui verticales (1) sur le deuxième côté vertical opposé, et dans lequel les pièces de pression sont réalisées de préférence en forme de coin et présentent au moins un alésage ; et/ou dans lequel les plaques d'appui (1 ; 2) sont des plaques d'espacement meulées d'une seule pièce et le rail de guidage (LF) est de préférence un rail de guidage linéaire.

6. Support de précision (100) d'un dispositif de guidage selon l'une quelconque des revendications 1 à 5, dans lequel le support de précision est réalisé pour recevoir un rail de guidage (LF) sur un corps de base (3) du dispositif de guidage, dans lequel le corps de base (3) peut être une partie structurelle d'une machine-outil, comprenant
- une pluralité de plaques d'appui (1 ; 2) remplaçables, lesquelles forment des sections d'appui pour la mise en contact avec le rail de guidage (LF) et sont positionnées à cet effet sur le corps de base (3), le long d'un axe de guidage du rail de guidage (LF) ;
dans lequel les plaques d'appui (1 ; 2) présentent respectivement une première surface d'appui pour la mise en contact avec le rail de guidage (LF) et une deuxième surface d'appui pour la mise en contact avec le corps de base (3) et les plaques d'appui (1 ; 2) sont prévues pour la compensation de tolérances entre une surface de palier du rail de guidage (LF) et une surface d'appui du corps de base (3) ; **caractérisé en ce que**
la pluralité de plaques d'appui (1 ; 2) comprend des plaques d'appui horizontales (2) et des plaques d'appui verticales (1) et les plaques d'appui horizontales (2) sont prévues à distance et parallèlement les unes aux autres le long d'une surface d'appui horizontale du corps de base (3) et les plaques d'appui verticales (1) sont prévues parallèlement les unes aux autres le long d'une surface d'appui verticale sur le corps de base (3).

7. Support de précision selon la revendication 6, dans lequel les plaques d'appui (1 ; 2) sont positionnées pour la compensation d'un écart de précision du rail de guidage (LF) et/ou du corps de base (3) en fonction de leurs épaisseurs de plaque le long de l'axe de guidage de telle sorte que le rail de guidage (LF) supporté sur les plaques d'appui (1 ; 2) soit amené dans une position de guidage idéale.

8. Support de précision selon au moins l'une quelconque des revendications 6 ou 7, dans lequel la première surface d'appui et la deuxième surface d'appui d'une plaque d'appui (1 ; 2) sont réalisées parallèlement l'une à l'autre dans le plan et l'écart maximal de la distance entre la première surface d'appui et la deuxième surface d'appui est inférieur ou égal à 1 µm et de préférence la surface de la première et/ou de la deuxième surface d'appui est meulée ; et/ou dans lequel les plaques d'appui horizontales (2) sont des rondelles d'espacement qui présentent respectivement une ouverture pour recevoir une vis de fixation (5) du rail de guidage (LF).

9. Procédé de réglage de la position d'un rail de guidage (LF) d'un dispositif de guidage selon au moins l'une quelconque des revendications 1 à 5, **caractérisé par** les étapes suivantes :
adaptation de la position du rail de guidage (LF) à une position prédéfinie par adaptation de forme d'au moins une plaque d'appui (1 ; 2) en une forme adaptée et/ou par remplacement d'au moins une plaque d'appui (1 ; 2).

10. Procédé selon la revendication 9, dans lequel, pour l'adaptation de la position du rail de guidage (LF), la distance entre le corps de base (3) et le rail de guidage (LF) est réglée par adaptation de forme d'au moins une plaque d'appui (1 ; 2) en une forme adaptée ; et/ou dans lequel l'au moins une plaque d'appui (1 ; 2) est amenée par un procédé de fabrication par enlèvement de copeaux en une forme adaptée, en particulier par meulage pour la compensation de la forme et de la tolérance de position du corps de base (3) et/ou du rail de guidage (LF).

11. Procédé selon au moins l'une quelconque des revendications 9 à 10, dans lequel, pour l'adaptation du tracé de l'axe de guidage à un tracé idéal, la distance entre le rail de guidage (LF) et le corps de base (3) est adaptée par sections, par remplacement d'au moins une plaque d'appui (1 ; 2) par une plaque d'appui adaptée (1 ; 2), dans lequel la plaque d'appui adaptée (1 ; 2) est adaptée pour la compensation d'écarts de forme de la partie du rail de guidage (LF) et du corps de base (3) se trouvant dans la section d'appui respective ; et/ou dans lequel, pour l'adaptation de la position du rail de guidage (LF) dans une direction verticale, la distance entre le corps de base (3) et le rail de guidage (LF) est réglée par adaptation de forme d'au moins une plaque d'appui horizontale (1 ; 2) en une forme adaptée et dans lequel, pour l'adaptation de la position du rail de guidage (LF) dans une direction horizontale, la distance entre le corps de base (3) et le rail de guidage (LF) est réglée par adaptation de forme d'au moins une plaque d'appui verticale (1 ; 2) en une forme adaptée.

12. Procédé selon au moins l'une quelconque des revendications 9 à 11, comprenant les étapes suivantes :
- fixation du rail de guidage (LF) dans une direction horizontale par serrage du rail de guidage (LF) entre des pièces de pression latérales (P) et les plaques d'appui verticales (1) ; et
- fixation du rail de guidage (LF) dans une direction verticale par un assemblage vissé sur le corps de base (3), dans lequel les plaques d'appui horizontales (2) sont des plaques d'espacement de l'assemblage vissé.

13. Procédé d'assemblage d'un rail de guidage (LF) avec un corps de base (3) d'un dispositif de guidage selon au moins l'une quelconque des revendications 1 à 5, **caractérisé par** l'étape suivante : placement de plaques d'appui (1 ; 2) dans des sections le long de l'axe de guidage, dans lequel l'épaisseur de plaque des plaques d'appui (1 ; 2) est choisie pour chaque section de telle sorte qu'une compensation de tolérances a lieu lors du vissage et/ou du serrage du rail de guidage (LF) avec le corps de base (3).

14. Procédé d'ajustement de la position d'un rail de guidage (LF) sur un corps de base (3) d'un dispositif de guidage selon au moins l'une quelconque des revendications 1 à 5, dans lequel le procédé est **caractérisé par** les étapes suivantes :
détermination de la position du rail de guidage (LF) à une position de mesure avec un palpeur de mesure, et
adaptation de la position du rail de guidage (LF) à une position prédéfinie par adaptation d'au moins une plaque d'appui (1 ; 2) à la position de mesure en une forme adaptée et/ou par remplacement d'au moins une plaque d'appui (1 ; 2).
